# EUROPEAN PATENT APPLICATION

(11) **EP 1 221 278 A1**
(43) Date of publication of application: **10.07.2002**
(21) Application number: 02250088.8
(22) Date of filing: 08.01.2002
(51) Int. Cl.: A01D 34/695, A01D 34/82

(54) **Grass cutting machine**

(30) Priority: 09.01.2001 GB 0100533
(71) Applicant: ELECTROLUX OUTDOOR PRODUCTS LIMITED, Newton Aycliffe, County Durham DL5 6UP (GB)
(72) Inventor: Zwolinski, Paul, Northallerton, North Yorkshire DL7 8FE (GB); Mutton, Leonard, School Aycliffe, Country Durham DL5 6TB (GB)
(74) Representative: Pratt, David Martin

(57) **Abstract**

A grass cutting machine (1) comprises a housing (2) open to ground datum. A cutter is mounted within the housing (2), and drive means are provided for driving the cutter. A ground-engageable support member (6) is mounted on the housing at the front end thereof for rotation about a substantially horizontal axis. The support means (6) has a curved surface of such a form that engagement with the ground is substantially by point contact.

## Description

This invention relates to a grass cutting machine such as a lawnmower.

A traditional form of garden design typically comprises a relatively large area of lawn surrounded by cultivated borders containing plants and shrubs. The junction between the lawn and each border is traditionally cut to a sharp edge, with a shallow valley or trough dug into the soil of the border. It is the cutting of the grass along this periphery that is invariably difficult to achieve with conventional lawnmower designs.

There are two main types of lawnmower currently in production, namely a machine which is supported, relative to ground datum, by wheels, rollers or a combination of both (commonly called a wheeled rotary machine), and a machine which is supported by a cushion of air within a hood (commonly called a hover mower). In the former case, the machine includes either a cutting blade rotatable about an axis which is substantially vertical relative to ground datum, or a cutting system having a cylindrical cutting unit which includes a plurality of blades, and which, in use, is rotatable about an axis which is substantially parallel to ground datum. In the latter case, the machine usually includes a cutting blade rotatable about a generally vertical axis. In either case, the cutting system may be powered by an electric motor or an internal combustion engine.

Machines in both of these main types suffer from problems when attempting to cut the grass around the periphery of a lawn. Considering first a hover mower, when such a machine is positioned over the edge of a lawn such that its blade can cut right up to the edge of the lawn, the hood of the mower overhangs the edge of the lawn. The result of this is that the air cushion escapes into the trough, and the supporting cushion of air collapses. This causes the mower to make contact with the grass, and hence becomes difficult to push forward. An additional effect is that the blade becomes closer to the ground, resulting in the grass being cut too short. This effect is made worse if the lawnmower is of the grass collecting type, since the additional weight of the clippings in the collection receptacle contribute to the resistance to forward motion. Scuffing of the edge of the lawn is also a possibility in this event.

The wheeled rotary type of mower suffers from a similar problem, in that one or more of the front and/or rear wheels can drop off the lawn edge into the shallow trough, again making the mower difficult to push forward, and cutting the grass unacceptably short or even scuffing the lawn edge. If the machine is fitted with a rear roller, the effects of this are reduced as at least the rear of the machine is supported on said roller.

The present invention provides a grass cutting machine comprising a housing open to ground datum, a cutter mounted within the housing, drive means for driving the cutter, and a ground-engageable support member mounted on the housing at the front end thereof for rotation about a substantially horizontal axis, the support means having a curved surface of such a form that engagement with the ground is substantially by point contact.

Advantageously, the support member has a generally ellipsoidal (preferably spherical) surface.

In a preferred embodiment, the support member is positioned generally centrally at the front end of the housing.

The support member may be hollow. Whether hollow or not, it may be made from a thermoplastics material.

Preferably, the machine further comprises an impeller positioned within the housing and in a drivable engagement with the drive means.

The housing may define a hover chamber substantially in the form of an inverted dish. Alternatively, the machine may further comprise rotatable support means at the end of the housing opposite to said one end. A roller or a pair of wheels may constitute the rotatable support means.

Three forms of lawnmower, each of which is constructed in accordance with the invention, will now be described, by way of example, with reference to the drawings, in which:-
Figure 1 is a perspective view of the first form of lawnmower;
Figure 2 is a perspective view of part of the lawnmower of Figure 1;
Figure 3 is a perspective view of a modified form of the lawnmower part shown in Figure 2; and
Figure 4 is a perspective view of the second form of lawnmower.

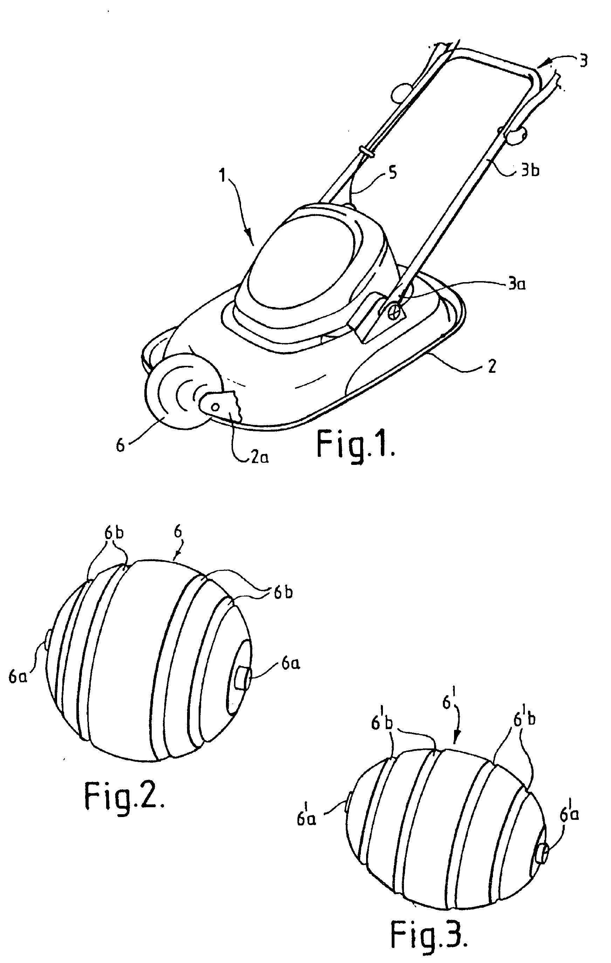

Referring to the drawings, Figure 1 shows a hover lawnmower 1 having a hood 2 in the form of an inverted dish. The hood 2 is pivotally connected to the lower ends 3a of the arms 3b of a handle assembly 3. An electric motor (not shown) is mounted within a housing 4 positioned above the hood 2. Power is supplied to the electric motor via an electric cable 5. A rotatable cutting blade (not shown) and an impeller (not shown) are mounted within the hood 2, these two members being driven via a drive line (not shown) by the electric motor. The cutting blade is rotatable about a generally vertical axis.

A generally spherical support member (ball) 6 is provided at the front of the hood 2, the ball being rotatably mounted between a pair of brackets 2a fixed to the hood about a horizontal axis defined by a pair of diametrically-opposed spigots 6a (see Figure 2) formed on the ball 6. The ball 6 is formed with four parallel circumferential grooves 6b. These grooves 6b are provided to improve the stiffness of the ball 6 to prevent the ball collapsing under impact. The ball 6 is sized and positioned so that its lower surface projects slightly (3 mm to 10 mm) below the base of the hood 2.

When the lawnmower 1 is in normal use, that is to say when it is used away from the edge of a lawn, the ball 6 is lifted with the hood 2 so as to be out of contact with the ground. The lawnmower 1 thus operates in exactly the same manner as a normal hover mower. However, when the lawnmower 1 is used to cut grass at a lawn edge, and the hood 2 overhangs the edge of the lawn, the drop in air pressure beneath the hood causes the machine to drop, until the ball 6 contacts the grass at the edge of the lawn.

Although the collapse of the air cushion within the hood 2 causes the lawnmower 1 to drop, the drop distance is considerably less than with known hover mowers, so there is a substantially reduced risk of the grass being cut too short, or the ground being scuffed when this happens. Moreover, because of the spherical surface of the ball 6, the lawnmower 1 is easily manoeuvrable, even though the machine is no longer hovering. When the user attempts to push the lawnmower 1 forwards, the ball 6 runs along the lawn edge with minimum resistance.

As mentioned above, under normal cutting conditions, the ball 6 plays very little part in assisting manoeuvrability of the mower. It does, however, come into play when the lawnmower 1 is traversed over undulations in the lawn. The ball 6 then assists the lawnmower to glide over such obstructions, rather than allowing the mower to ground and drag, as occurs with known hover mowers.

The generally spherical shape of the ball 6 is important, because it makes only substantially point contact with the lawn surface and has generally curved sides. Both of these properties ensure that the ball 6 does not impede transverse movements of the lawnmower 1. Consequently, as with known hover mowers, the user of the lawnmower 1 can move it in a "side-to-side" direction to avoid obstacles, or to make a reversal in the direction of mowing. Consequently, the side-to-side maneourability of known hover mowers is not diminished by the provision of the ball 6 on this lawnmower 1. Additionally, the fact that only point contact is made with the ground, means that grass ahead of the cutting blade does not become flattened, as would be the case if a rotatable, cylindrical support member were used, as is known for some types of hover mower.

Another advantage of the lawnmower 1 is the ease with which it can be moved, when it has to be transported between its storage area and a lawn, or between different, spaced-apart lawn areas. Normally, during transportation, a hover mower is in an un-powered state, and does not float on an air cushion. Known hover mowers, have, therefore, to be carried or dragged along in such transport trips. The provision of the ball 6 does, however, enable the lawnmower 1 to be manoeuvred easily when un-powered, as the mower may be raised by the handle assembly 3 and then moved in a similar manner as one would lift and move a wheelbarrow.

Figure 3 shows a modified form of support member 6¹. This support member 6' is generally ellipsoidal in configuration, is supported within the brackets 2a of the hood 2 by means of diametrically-opposed spigots 6¹a, and has four parallel circumferential grooves 6¹ b, again to improve the stiffness of the component. As with the ball 6a, the support member 6¹ is sized and positioned so its lower surface projects slightly (3 mm to 10 mm) below the base of the hood 2. Although not spherical, the support member 6' provides substantially the same advantages as the ball 6. Thus, it makes substantial point contact with a lawn surface, and has generally curved sides, so that it does not impede transverse movements of the lawnmower 1. It is also easy to make "side-to-side" movements, and transportation of the mower when in an un-powered state is facilitated.

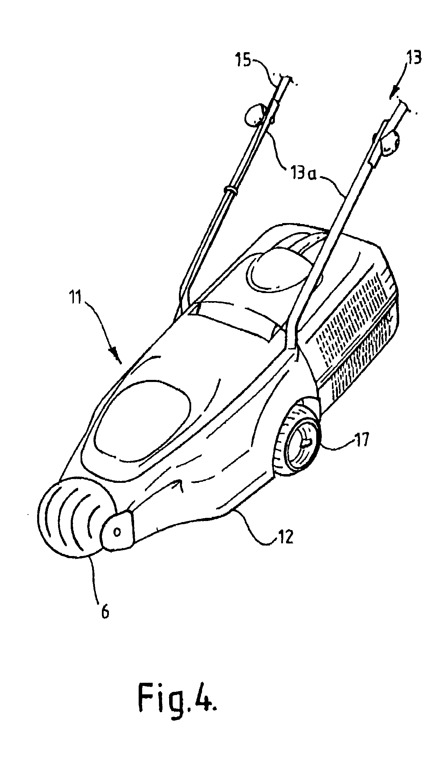

Figure 4 shows a wheeled rotary lawnmower 11 having a housing 12 and a handle assembly 13 constituted by a pair of arms 13a. An electric motor (not shown) is mounted within the housing 12, power being supplied to the electric motor by an electric cable 15. A rotatable cutting blade (not shown) and an impeller (not shown) are mounted within the housing 12, these two members being driven via a drive line (not shown) by the electric motor. The cutting blade is rotatable about a generally vertical axis.

The rear of the lawnmower 11 is supported by a pair of wheels 17 (only one of which can be seen in Figure 4), and the front is supported by a ball 6 identical to that of the embodiment of Figure 1. The ball 6 replaces the usual pair of front wheels of a wheeled rotary lawnmower. During normal grass cutting, the ball 6 performs the same function as the front wheels of a conventional wheeled rotary lawnmower, that is to say the ball 6 supports and guides the lawnmower. As with the embodiment of Figure 1, however, the ball 6 provides distinct advantages when the lawnmower 11 is used to transverse a lawn edge. In this case, the ball 6 runs along the lawn edge supporting the front of the lawnmower 11, and maintaining an acceptable height of cut. The rear of the lawnmower 11 will be supported partially by one of the rear wheels 17, and partially by the user applying upward pressure to the handle assembly 13.

In a modified version of the embodiment of Figure 4, the rear wheels 17 could be replaced by a rear roller. In this case, when traversing a lawn edge, the lawnmower 11 would be adequately supported by the ball 6 at the front and by the roller at the rear.

As with the embodiment of Figure 1, the front of the hood 22 is provided with a support ball 6, the ball being supported by brackets (not shown). As with the embodiment of Figure 1, the provision of the ball 6 gives the lawnmower 21 the advantages improved cutting at lawn edges, as well as easy manoeuvrability, and easy transport of the mower when un-powered.

The ball 6 could be made from a thermoplastics material, and may be of hollow construction. This could be achieved economically using the blow moulding process, but equally the ball could be produced by injection moulding. In this case, the ball would be produced in two halves, which would subsequently be joined together. The thermoplastics material could be high density polyethylene, polypropylene or a similar material. Alternatively, the ball 6 could be manufactured as a homogeneous object from a material, such as a semi-rigid foam, having a cellular structure. It would also be possible for a ball made in accordance with any of the ways mentioned above to be covered with a layer of compliant rubber or elastomeric material to give the effect of a tyre.

It will be apparent that the ball 6 (or support member 6') could be provided with a different number of grooves 6b (or 6'b), or it could be smooth.

## Claims

1. A grass cutting machine comprising a housing open to ground datum, a cutter mounted within the housing, drive means for driving the cutter, and a ground-engageable support member mounted on the housing at the front end thereof for rotation about a substantially horizontal axis, the support means having a curved surface of such a form that engagement with the ground is substantially by point contact.

2. A machine as claimed in claim 1, wherein the support member has a generally ellipsoidal surface.

3. A machine as claimed in claim 2, wherein the support member has a generally spherical surface.

4. A machine as claimed in any one of claims 1 to 3, wherein the support member is positioned generally centrally at the front end of the housing.

5. A machine as claimed in any one of claims 1 to 4, wherein the support member is hollow.

6. A machine as claimed in any one of claims 1 to 5, wherein the support member is made from a thermoplastics material.

7. A machine as claimed in any one of claims 1 to 6, wherein the housing defines a hover chamber substantially in the form of an inverted dish.

8. A machine as claimed in any one of claims 1 to 6, further comprising rotatable support means at the rear end of the housing.

9. A machine as claimed in claim 8, wherein a roller constitutes the rotatable support means.

10. A machine as claimed in claim 9, wherein a pair of wheels constitutes the rotatable support means.

11. A machine as claimed in any one of claims 1 to 10, further comprising an impeller positioned within the housing and in drivable engagement with the drive means.
